# EUROPEAN PATENT APPLICATION

(11) **EP 4 431 397 A1**
(43) Date of publication of application: **18.09.2024**
(21) Application number: 24164249.5
(22) Date of filing: 18.03.2024
(51) Int. Cl.: B64D 13/06

(54) **IMPROVED ENERGY RECOVERY AND THERMAL CONTROL UTILIZING HEAT PUMP**

(30) Priority: 17.03.2023 US 202318185652
(71) Applicant: Hamilton Sundstrand Corporation, Charlotte, NC 28217-4578 (US)
(72) Inventor: PARLANTE, Kyle R., Suffield, CT, 06093 (US)
(74) Representative: Dehns

(57) **Abstract**

A vehicle system including a first medium provided from a first subsystem and a vapor cooling system (40) having a closed loop vapor compression cycle through which a cooling medium circulates. The first subsystem is fluidly coupled to the vapor cooling system (40). A second medium is provided from a second subsystem and the second subsystem is fluidly coupled to the vapor cooling system (40).

## Description

### BACKGROUND

Exemplary embodiments pertain to one or more subsystems of an aircraft, and more particularly, to a vapor cooling system thermally coupled to one or more subsystems of an environmental control system.

A typical commercial aircraft includes several nonintegrated cooling systems configured to provide temperature control to various regions of the aircraft. For example, an aircraft environmental control system primarily provides heating and cooling for the aircraft cabin area. In addition, a galley chiller system is dedicated to refrigerating the food carts in the galleys located throughout the aircraft. Yet another system is dedicated to cooling the cargo area of the aircraft. Since each system has a significant weight and power requirement, the overall efficiency of the aircraft is affected by these nonintegrated systems.

### BRIEF DESCRIPTION

According to an embodiment, a vehicle system includes a first medium provided from a first subsystem and a vapor cooling system having a closed loop vapor compression cycle through which a cooling medium circulates. The first subsystem is fluidly coupled to the vapor cooling system. A second medium is provided from a second subsystem and the second subsystem is fluidly coupled to the vapor cooling system.

In addition to one or more of the features described above, or as an alternative to any of the foregoing embodiments the first subsystem is a cabin discharge air system.

In addition to one or more of the features described above, or as an alternative to any of the foregoing embodiments the first medium is cabin recirculation air.

In addition to one or more of the features described above, or as an alternative to any of the foregoing embodiments the second subsystem is a cabin discharge air system.

In addition to one or more of the features described above, or as an alternative to any of the foregoing embodiments the second medium is cabin discharge air.

In addition to one or more of the features described above, or as an alternative to any of the foregoing embodiments the second subsystem is an electronics cooling subsystem.

In addition to one or more of the features described above, or as an alternative to any of the foregoing embodiments the vapor cooling system is a heat pump.

In addition to one or more of the features described above, or as an alternative to any of the foregoing embodiments the vapor cooling system includes a first heat exchanger and a second heat exchanger. The first subsystem is fluidly coupled to the first heat exchanger and the second subsystem is fluidly coupled to the second heat exchanger.

In addition to one or more of the features described above, or as an alternative to any of the foregoing embodiments an outlet of the first heat exchanger is fluidly coupled to a cabin of the vehicle such that a conditioned first medium output from the first heat exchanger is provided to the cabin.

In addition to one or more of the features described above, or as an alternative to any of the foregoing embodiments an outlet of the first heat exchanger is fluidly coupled to an air mixing unit of the vehicle such that a conditioned first medium output from the first heat exchanger is provided to the air mixing unit.

In addition to one or more of the features described above, or as an alternative to any of the foregoing embodiments an outlet of the first heat exchanger is fluidly coupled to an environmental control system of the vehicle such that a conditioned first medium output from the first heat exchanger is provided to the environmental control system.

In addition to one or more of the features described above, or as an alternative to any of the foregoing embodiments an outlet of the first heat exchanger is fluidly coupled to an atmosphere external to the vehicle.

According to an embodiment, a method including conditioning a first medium provided from a first subsystem of a vehicle at a vapor cooling system to form a conditioned first medium and recovering energy from a second medium provided from a second subsystem of the vehicle at the vapor cooling system. The vapor cooling system includes a closed-loop vapor compression cycle and the recovered energy is used to condition the first medium.

In addition to one or more of the features described above, or as an alternative to any of the foregoing embodiments the vapor cooling system includes a first heat exchanger and a second heat exchanger and conditioning the first medium occurs at the first heat exchanger using a cooling medium and conditioning the second medium occurs at the second heat exchanger using the cooling medium.

In addition to one or more of the features described above, or as an alternative to any of the foregoing embodiments including reversing a direction of flow of the cooling medium based on a temperature of the first medium output from the first subsystem.

In addition to one or more of the features described above, or as an alternative to any of the foregoing embodiments including exhausting at least one of the first medium and the second medium overboard from the vapor cooling system.

In addition to one or more of the features described above, or as an alternative to any of the foregoing embodiments including returning the conditioned first medium to a subsystem separate from the first subsystem.

In addition to one or more of the features described above, or as an alternative to any of the foregoing embodiments including returning the conditioned second medium to the second subsystem.

In addition to one or more of the features described above, or as an alternative to any of the foregoing embodiments at least one the first subsystem and the second subsystem is a cabin discharge system.

In addition to one or more of the features described above, or as an alternative to any of the foregoing embodiments the second subsystem is an electronics cooling subsystem.

### BRIEF DESCRIPTION OF THE DRAWINGS

The following descriptions should not be considered limiting in any way. With reference to the accompanying drawings, like elements are numbered alike:
FIG. 1 is an example of a schematic diagram of an air management system of an aircraft according to an embodiment;
FIG. 2 is a schematic diagram of a vapor cooling system operably coupled to an air management system of an aircraft according to an embodiment; and
FIG. 3 is a schematic diagram of a vapor cooling system operably coupled to one or more subsystems of an aircraft according to an embodiment.

### DETAILED DESCRIPTION

A detailed description of one or more embodiments of the disclosed apparatus and method are presented herein by way of exemplification and not limitation with reference to the Figures.

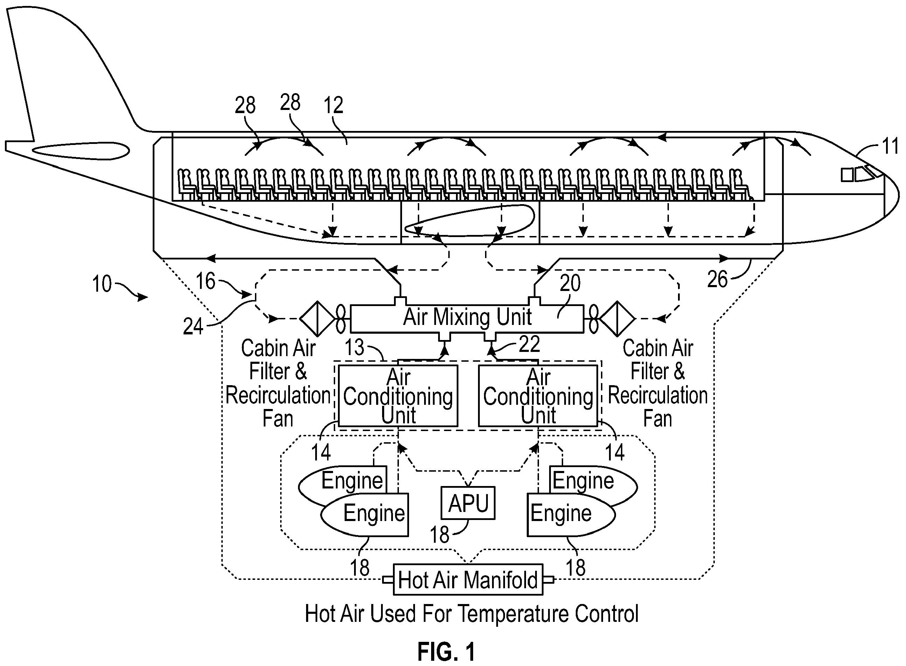

With reference now to FIG. 1, an example of schematic of an air management system 10 of a vehicle, such as an aircraft 11 is illustrated. As shown, the aircraft includes a cabin 12 fluidly coupled to the air management system 10. In the illustrated, non-limiting embodiment, the cabin 12 is a compartment of an aircraft that includes an internal environment. For example, cabin 12 may be configured to house people, cargo, and the like therein. The air management system 10 is configured to provide conditioned air to the cabin 12 as well as remove used or contaminated air from the cabin 12. The air management system 10 includes an environmental control system 13 including at least one air conditioning unit or pack 14, and a cabin discharge air system 16. While the air management system 10 is illustrated and described herein with reference to an aircraft 11, it should be understood that the systems and techniques discussed herein may be used for a variety of ventilation systems. For example, cabin 12 may be replaced with any pressurized cabin. As such, systems described herein may be used with submarine ventilation systems, personnel carrier ventilation systems, bus ventilation systems, or any other ventilation system that may use pressurized air.

As shown in the FIG. 1, a medium, such as air for example, is provided from one or more sources 18 to the air management system 10. Examples of suitable sources 18 include but are not limited to an engine of the aircraft 11, an auxiliary power unit of the aircraft 11, and fresh, outside air. The medium output from these sources 18 is provided to the one or more air conditioning units 14 of the environmental control system 13. Within the air conditioning units 14, the medium is conditioned. This conditioning includes altering one or more of a pressure, temperature, humidity, or flow rate of the medium based on an operating condition of the aircraft. The medium output or discharged from the one or more air conditioning units 14 of the environmental control system 13 may be used to maintain a target range of pressures, temperatures, and/or humidity within the cabin 12.

The medium discharged from the air conditioning units 14 is provided to an air mixing unit or mixing manifold 20 via one or more outlet ducts 22. Similarly, at least one duct 24 of the cabin discharge air system 16 extends from the cabin 12 to the air mixing unit 20 to deliver air exhausted from the cabin 12 to the air mixing unit 20. Within the air mixing unit 20, the cabin recirculating air is mixed with the medium output from the one or more air conditioning units 14 to achieve a mixed medium having one or more desired parameters, such as temperature, pressure, and humidity for example.

In an embodiment, the mixed medium is delivered to the cabin 12 from the air mixing unit 20 via one or more conduits 26. As shown, the mixed medium may be delivered to the cabin 12 via a ventilation system arranged near a ceiling of the cabin 12. In some embodiments, the mixed medium typically circulates from the top of the cabin 12 toward the floor and is distributed to a plurality of individual vents 28 of the ventilation system mounted spaced laterally between the front and rear of the cabin 12. It should be understood that the air management system 10 illustrated and described herein is intended as an example only, and that any suitable air management system is within the scope of the disclosure.

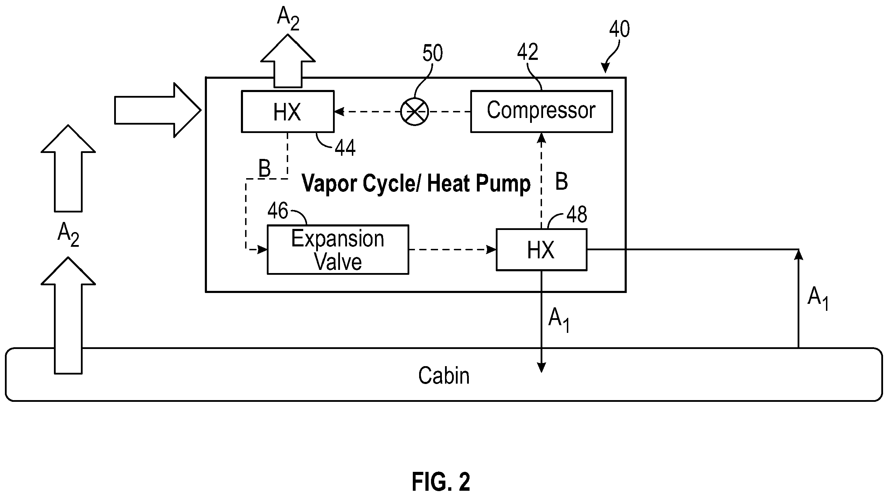

With continued reference to FIG. 1, and further reference to FIG. 2, the temperature of the air collected within the cabin discharge air system 16 may be different than the temperature of the air provided to the cabin 12 from the air mixing unit 20. Accordingly, in some embodiments, the portion of the cabin air intended to be returned to the air mixing unit 20 via one or more conduits 24, also referred to herein as "cabin recirculation air," may be conditioned at a location downstream from an outlet of the cabin 12 and upstream from the air mixing unit 20. In an embodiment, conditioning the cabin recirculation air includes cooling or heating the cabin recirculation air.

As shown in FIG. 2, a flow of a first medium A₁, such as the cabin recirculation air for example, provided from a first subsystem of the vehicle, may be cooled by a cooling medium B within at least one heat exchanger. Unlike existing systems where the cabin recirculation air is conditioned within the environmental control system 13, in an embodiment, the cooling medium B is a fluid contained within a separate or secondary vapor cooling system 40, such as having a closed loop vapor compression cycle for example. In such embodiments, the vapor cooling system 40 is thermally coupled to the air management system 10 at the at least one heat exchanger.

In FIG. 2, the vapor cooling system 40 includes a compressor 42, a first heat exchanger 44, and expansion valve 46, and a second heat exchanger 48 arranged to form a closed fluid loop through which the cooling medium circulates. The cooling medium B may be any suitable fluid including refrigerant, or any other fluid having suitable thermodynamic properties for proper operation of a vapor compression cycle. Although not shown, the compressor 42 may be operably coupled to an electric motor. However, in some embodiments, the compressor 42 may be alternatively or additionally driven by energy from another source. For example, the compressor 42 may be operably coupled to a turbine via a shaft and energy extracted within the turbine may be used to drive the compressor 42.

The vapor cooling system 40 may additionally include a reversing valve 50 operable to selectively control the direction of flow of the cooling medium B in either a first direction or a second direction within the fluid loop, such as based on a temperature of the first medium A₁ output from the first subsystem. In such embodiments, the vapor cooling system 40 may be considered a heat pump. Accordingly, when the reversing valve 50 is in a first position, the cooling medium B is configured to flow from the compressor 42 to the first heat exchanger 44, to the expansion valve 46, to the second heat exchanger 48, as shown in FIG. 2. In such a configuration, the first heat exchanger 44 is operable as a condenser or heat rejection heat exchanger and the second heat exchanger 48 is operable as an evaporator or a heat absorption heat exchanger. When the reversing valve 50 is in a second position, the cooling medium B is configured to flow from the compressor 42 to the second heat exchanger 48, to the expansion valve 46, and to the first heat exchanger 44 in series. In such a configuration, the second heat exchanger 48 is operable as a condenser or heat rejection heat exchanger and the first heat exchanger 44 is operable as an evaporator or a heat absorption heat exchanger.

With continued reference to FIG. 2, in embodiments where the first medium A₁, such as cabin recirculation air for example, has been heated within the cabin 12 and therefore needs to be cooled, the first medium A₁ may be provided to a heat exchanger of the vapor cooling system 40, such as the second heat exchanger 48 operable as a heat absorption heat exchanger of the vapor cooling system 40. Accordingly, within the second heat exchanger 48, heat is configured to transfer from the first medium A₁ to the cooling medium B. Similarly, when the first medium A₁ needs to be heated, the position of the reversing valve 50 may be adjusted such that the second heat exchanger 48 is configured as the heat rejecting heat exchanger. In such embodiments, within the second heat exchanger 48, heat from the cooling medium B is configured to transfer to the first medium A₁. The conditioned first medium A₁, for example, cabin recirculation air output from the heat exchanger 48 of the vapor cooling system 40 may be delivered to same first subsystem, or alternatively, to a different subsystem of the vehicle. For example, the conditioned first medium A₁ provided at the outlet of the second heat exchanger 48 may be returned to the air mixing unit 20 as previously described, may be returned directly to the cabin 12, or alternatively, or additionally may be provided to another system of the vehicle, such as the environmental control system 13 for example.

To counteract the heat transfer that occurs at the second heat exchanger 48 of the vapor cooling system 40, a second medium A₂ provided from a second subsystem, is arranged in a heat transfer relationship with the cooling medium B at the first heat exchanger 44. In the illustrated, non-limiting embodiment of FIG. 2, the second medium A₂ is a flow of cabin discharge air, which is air exhausted from the cabin and that would normally be discharged overboard from the aircraft. Accordingly, in an embodiment, the first medium A₁ and the second medium A₂ may both be provided from the same subsystem, such as the cabin discharge system 16 for example. In embodiments where the reversing valve 50 is in a first position and the second heat exchanger 48 is configured as a heat absorption heat exchanger, heat is configured to transfer from the cooling medium B to the second medium A₂. Similarly, when the reversing valve 50 is in the second position and the second heat exchanger is configured as a heat rejection heat exchanger, the cooling medium B is configured to receive heat from the second medium A₂. In embodiments where the second medium A₂ is cabin discharge air, the conditioned second medium A₂ output from the first heat exchanger 44 may be exhausted overboard, into the ambient or external atmosphere surrounding the vehicle. By using cabin discharge air, a secondary flow source, such as a fan for example, would not be required when the aircraft is at altitude because of the pressure differential of the cabin and the outside ambient pressure. Although cabin discharge air is illustrated and described herein as the second medium A₂, it should be appreciated that embodiments where the second medium A₂ is supplied from another available source of the aircraft 11 besides the cabin discharge system 16 are also within the scope of the disclosure.

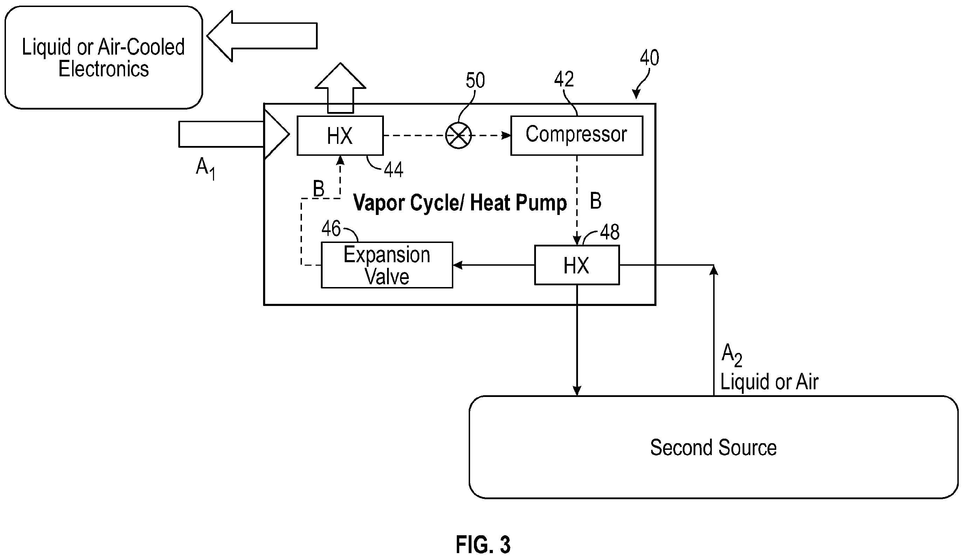

In other embodiments, such as shown in FIG. 3 for example, the first medium A₁ to be conditioned by the vapor cooling system 40 may be provided from a source other than the cabin 12. Examples of suitable mediums include but are not limited to, a liquid or air flow from an electronics cooling subsystem, and air surface cooler heat exchanger, fuel, bleed air drawn from an engine or auxiliary power unit of the vehicle, and a flow of fresh or outside air. In the illustrated, non-limiting embodiment, the first medium A₁ is the fluid of the electronics cooling subsystem and is provided to a heat exchanger of the vapor cooling system 40, such as the first heat exchanger 44 for example, to control the temperature of the fluid of the electronics cooling subsystem and therefore the electronics to be cooled by the electronics cooling subsystem. Accordingly, whether the first medium A₁ needs to be warmed or cooled by the vapor cooling system 40 may depend on the external conditions of the ambient atmosphere.

In embodiments where the first medium A₁ needs to be cooled by the vapor cooling system 40, any suitable medium operable as a heat sink, including but not limited to cabin recirculation air, cabin exhaust air, fuel, and ram air, may be used as the second medium A₂ provided to the second heat exchanger 48. By heating the first medium A₁ of the electronics cooling subsystem, hard cold starts of the associated electronics may be reduced. Accordingly, to heat the first medium A₁ at the vapor cooling system 40, the first heat exchanger 44 is operable as a condenser, such that heat from the cooling medium B is transferred to the first medium A₁ at the first heat exchanger 44. During such operating conditions, any suitable medium provided from a second source and having excess heat to release may be provided to the second heat exchanger 48 as the second medium A₂.

A system including a vapor cooling system 40 operably coupled to one or more other systems of a vehicle, such as the air management system 10 of an aircraft for example, allows for energy recovery of a conditioned medium such as air prior to exhausting the conditioned air overboard. This recovered energy may be used to further condition another fluid flow, such as the first medium A₁ for example, at the vapor cooling system 40. Further, the use of a heat pump vapor cooling system 40 allows such a benefit to be achieved for both heating and cooling.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A vehicle system comprising:
a first medium provided from a first subsystem;
a vapor cooling system (40) having a closed loop vapor compression cycle through which a cooling medium circulates, the first subsystem being fluidly coupled to the vapor cooling system (40); and
a second medium provided from a second subsystem, the second subsystem being fluidly coupled to the vapor cooling system (40).

2. The vehicle system of claim 1, wherein the first subsystem is a cabin discharge air system, or wherein the first medium is cabin recirculation air.

3. The vehicle system of any preceding claim, wherein the second subsystem is a cabin discharge air system, and optionally wherein the second medium is cabin discharge air.

4. The vehicle system of any preceding claim, wherein the second subsystem is an electronics cooling subsystem.

5. The vehicle system of any preceding claim, wherein the vapor cooling system (40) is a heat pump.

6. The vehicle system of any preceding claim, wherein the vapor cooling system (40) further comprises a first heat exchanger (44) and a second heat exchanger (48), the first subsystem being fluidly coupled to the first heat exchanger (44) and the second subsystem being fluidly coupled to the second heat exchanger (48).

7. The vehicle system of claim 6, wherein an outlet of the first heat exchanger (44) is fluidly coupled to a cabin of the vehicle such that a conditioned first medium output from the first heat exchanger (44) is provided to the cabin.

8. The vehicle system of claim 6, wherein an outlet of the first heat exchanger (44) is fluidly coupled to an air mixing unit of the vehicle such that a conditioned first medium output from the first heat exchanger (44) is provided to the air mixing unit, or wherein an outlet of the first heat exchanger (44) is fluidly coupled to an environmental control system of the vehicle such that a conditioned first medium output from the first heat exchanger (44) is provided to the environmental control system.

9. The vehicle system of claim 6, wherein an outlet of the first heat exchanger (44) is fluidly coupled to an atmosphere external to the vehicle.

10. A method comprising:
conditioning a first medium provided from a first subsystem of a vehicle at a vapor cooling system (40) to form a conditioned first medium, the vapor cooling system (40) including a closed-loop vapor compression cycle; and
recovering energy from a second medium provided from a second subsystem of the vehicle at the vapor cooling system (40), wherein the recovered energy is used to condition the first medium.

11. The method of claim 10, wherein the vapor cooling system (40) includes a first heat exchanger (44) and a second heat exchanger (48) and conditioning the first medium occurs at the first heat exchanger (44) using a cooling medium and conditioning the second medium occurs at the second heat exchanger (48) using the cooling medium.

12. The method of claim 11, further comprising reversing a direction of flow of the cooling medium based on a temperature of the first medium output from the first subsystem.

13. The method of claim 10, 11 or 12, further comprising exhausting at least one of the first medium and the second medium overboard from the vapor cooling system (40).

14. The method of any of claims 10 to 13, further comprising returning the conditioned first medium to a subsystem separate from the first subsystem, and/or further comprising returning the conditioned second medium to the second subsystem.

15. The method of any of claims 10 to 14, wherein at least one the first subsystem and the second subsystem is a cabin discharge system, or wherein the second subsystem is an electronics cooling subsystem.
